# EUROPEAN PATENT SPECIFICATION

(11) **EP 1 928 105 B1**
(45) Date of publication and mention of the grant of the patent: **11.05.2011**
(21) Application number: 06291849.5
(22) Date of filing: 30.11.2006
(51) Int. Cl.: H04B 7/005

(54) **A method for power control in a mobile communication system**
Verfahren zur Leistungssteuerung in einem mobilen Kommunikationssystem
Procédé de contrôle de puissance dans un système de communication mobile

(43) Date of publication of application: 04.06.2008
(73) Proprietor: Alcatel Lucent, 75008 Paris (FR)
(72) Inventor: Agin, Anne, 92320 Chatillon (FR); Sehedic, Yann, 92170 Vanves (FR); Roosen, Fabienne, 92340 Bourg la Reine (FR); Doetsch, Uwe, 71701 Schwieberdingen (DE)
(74) Representative: El Manouni, Josiane

(56) References cited:
- EP-A- 1 594 267
- EP-A- 1 689 095
- WO-A-2006/018481
- WO-A-2006/040632
- US-A1- 2006 026 490
- US-A1- 2006 105 798
- SAMSUNG: "E-DCH outer loop power control" TSG-RAN WG1 MEETING #38BIS, no. R1-041096, 20 September 2004 (2004-09-20), - 24 September 2004 (2004-09-24) pages 1-3, XP002434846 Seoul, Korea
- "Universal Mobile Telecommunications System (UMTS)" ETSI STANDARDS, EUROPEAN TELECOMMUNICATIONS STANDARDS INSTITUTE, SOPHIA-ANTIPO, FR, vol. 3-R1, no. V720, September 2006 (2006-09), XP014035552 ISSN: 0000-0001
- "Universal Mobile Telecommunications System (UMTS)" ETSI STANDARDS, EUROPEAN TELECOMMUNICATIONS STANDARDS INSTITUTE, SOPHIA-ANTIPO, FR, vol. 3-R1, no. V700, March 2006 (2006-03), XP014035550 ISSN: 0000-0001
- LG ELECTRONICS: "Outer loop power control aspects of E-DCH" 3GPP TSG RAN WG1#38BIS, no. R1-041200, 20 September 2004 (2004-09-20), - 24 September 2004 (2004-09-24) pages 1-2, XP002447287 Seoul, Korea, Czech

## Description

The present invention generally relates to mobile communication systems.

The present invention in particular relates to third generation mobile communication systems, such as for example UMTS (Universal Mobile Telecommunication System), and their evolutions.

In a general way, mobile communication systems are subject to standardisation; therefore, for more information on such systems, reference can be made to the corresponding standards, published by the corresponding standardisation bodies, such as in particular 3GPP (3^{rd} Generation Partnership Project).

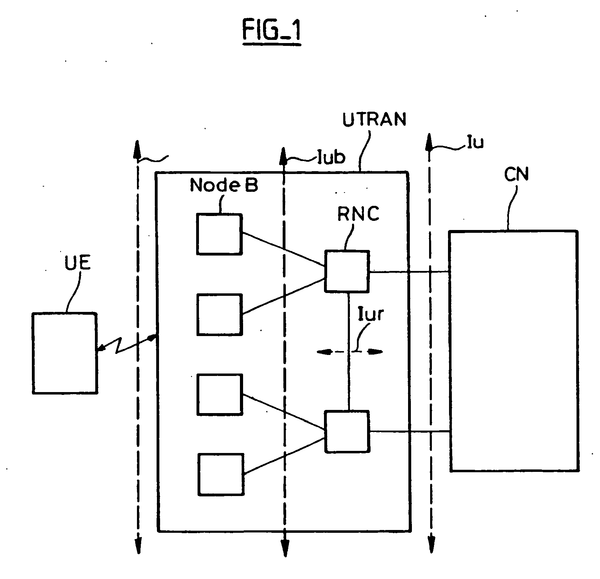

The general architecture of a system such as UMTS is recalled in figure 1.

The system comprises a mobile communication network communicating wih mobile stations or UEs (User Equipments) and with external networks (not specifically illustrated). The mobile communication network is composed of RAN (Radio Access Network), also called UTRAN (UMTS Terrestrial Radio Access Network), and CN (Core Network). UTRAN is composed of network elements such as Node B (base station), and RNC ( Radio Network Controller). UTRAN communicates with UE via a radio interface called Uu-interface. UTRAN communicates with CN via a terrestrial interface called lu- interface. Within UTRAN, Node B communicates with RNC via a terrestrial interface called lub- interface, and RNCs may communicate via a terrestrial interface called lur-interface. A description of the protocols on these interfaces can be found in the corresponding Technical Specifications published by 3GPP.

Radio interface protocols include, in particular, from higher to lower layers: RLC (Radio Link Control), MAC (Medium Access Control), Physical Layer. In the RLC layer, Radio Bearers are mapped to logical channels. In the MAC layer, logical channels are mapped to transport channels. In the physical layer, transport channels are mapped to physical channels. An example of transport channel is the DCH (Dedicated Channel). Examples of physical channels are the DPDCH (Dedicated Physical Data Channel) and the DPCCH (Dedicated Physical Control Channel).

Power control, in particular closed-loop power control, is generally used in such systems, to improve performances (in terms of quality of service, of capacity, ... etc.). Closed-loop power control generally includes inner-loop power control and outer-loop power control. Closed-loop power control for UMTS is specified in particular in 3GPP TS 25.214. 3GPP TS 25.213 describes spreading and modulation for UTRA Physical Layer FDD mode.

In the following, the case of uplink closed-loop power control will more particularly be considered.

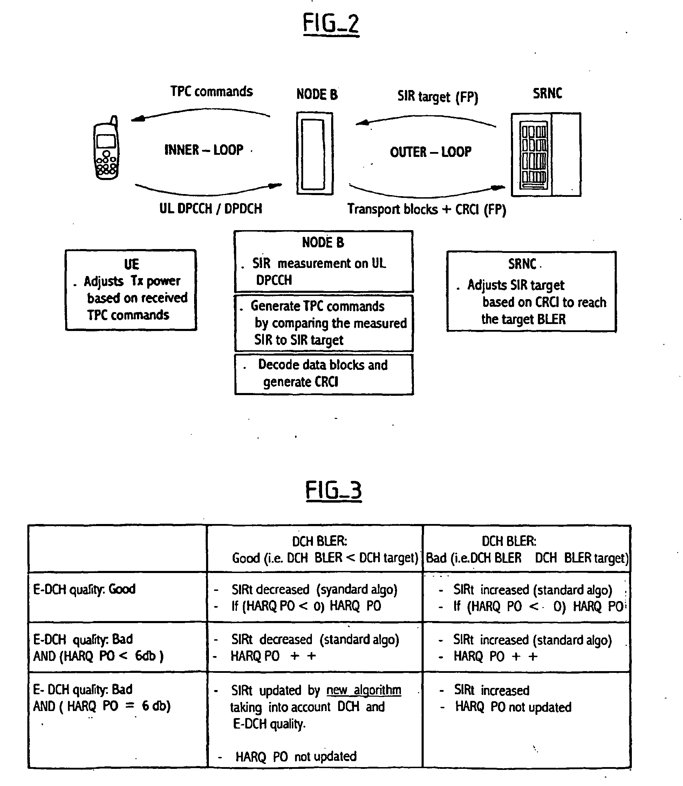

When uplink data is carried on DCH, the quality of the data transmitted in uplink direction is controlled thanks to two power control loops, as recalled in figure 2:
- Inner-loop power control, in Node B, that compares the measured SIR on an uplink control channel (UL DPCCH) to a target SIR, and generates Transmit Power Control (TPC) commands in the Downlink direction to keep the received uplink signal-to-interference ratio (SIR) at a given SIR target, SIR_{target}, this loop is fast (performed each slot, so 1500 limes per second)
- Outer-loop power control, in SRNC (serving RNC), that adapts the SIR target according to the measured quality (e.g. BLER (Block Error Rate)), this loop is slow (performed typically each second).

The SIR target value is sent by SRNC to Node B in the Outer Loop Power Control frame sent according to 3GPP TS 25.427 specifying UTRAN lub/lur interface user plane protocol for DCH data streams. At the reception of the Outer Loop Power Control frame, the Node B updates the SIR target used for the inner loop power control with the specified value.

Uplink DPCCH/DPDCH relative power (or gain factor) is independent of the inner-loop power control, and may vary for each TFC (Transport Format Combination) .

The present invention more particularly relates to power control in relation with the evolutions of such systems. An example of such evolutions which will more particularly be considered in the following is HSUPA (High Speed Uplink Packet Access) for UMTS, also called Enhanced Dedicated Channel (E-DCH), allowing enhanced performance with respect to Dedicated Channel (DCH), thanks to mechanisms such as fast physical layer HARQ (Hybrid Automatic Repeat reQuest) and Node B based scheduling. However, it should be understood that the present invention is not limited to such example.

Uplink E-DPDCH (Enhanced Dedicated Physical Data Channel)/DPCCH relative power, or gain factor, is independent of inner-loop power control and may take a different value for each E-TFC (E-DCH Transport Format Combination) and HARQ offset. The HARQ offsets to be used for support of different HARQ profiles are configured by higher layers. The uplink E-DPDCH to DPCCH power and the E-TFC are selected by UE. Only the maximum E-DPDCH to DPCCH power value is given by Node B (this corresponds to the "grant" process), but the actual E-DPDCH to DPCCH power value used by the UE is chosen by the UE as part of the E-TFC selection process.

An example of outer-loop power control for enhanced uplink communications is disclosed in documents US 2006/105798 A1, and WO 2006/040632 A1.

One problem is that, when uplink data is transmitted on HSUPA (i.e. on E-DCH transport channel, instead of DCH transport channel), the outer-loop power control algorithm recalled above for DCH cannot be used anymore, since the BLER measured in RNC for E-DCH is almost always equal to zero (as there are fast retransmissions at the physical layer between UE and Node B with HSUPA, which is not the case for DCH).

A possible solution for outer-loop power control, in particular for mono RAB (Radio Access Bearer) case, or mono service case (i.e. one PS (Packet Switched) RAB carried on HSUPA), is to consider the quality of E-DCH RAB, by using the "number of HARQ retransmissions" reported by Node B to the SRNC thanks to E-DCH Frame Protocol on lub. Then, the RNC compares the received value for "number of HARQ retransmissions" to a target value for the number of HARQ retransmissions and adopts the SIR target accordingly.

However, as recognized by the present invention, this is not an optimized solution, in particular for rnulti-RAB case, or multi service case (i.e. one PS RAB carried on HSUPA + one or several PS RAB(s) or CS (Circuit Switched) RAB(s) carried on DCH). In particular, this does not enable an optimized usage of both DCH and E-DCH radio resources (while this is very important for operators wanting to introduce HSUPA features in their network) and a higher throughput for the end user.

It is an object of the present invention to solve part or all of such problems, or to avoid part or all of such drawbacks. More generally it is an object of the present invention to improve the performances of such systems.

These and other objects ore achieved, in one aspect of the present invention, by a method for power control in a mobile communication system supporting simultaneous services per user, including at least a first service transported using a first transport channel and at least a second service transported using a second transport channel, transport using said first transport channel allowing enhanced performance with respect to transport using a second transport channel, said method comprising:
- a step of adjusting a target value for inner-loop power control, according to quality of communication using said second transport channel,
- a step of adjusting a power offset of a first physical channel associated to said first transport channel, according to quality of communication using said first transport channel,
- a step of additionnally adjusting said target value according to quality of communication using said first transport channel, if the thus adjusted power offset has reached a maximum value.

In an embodiment, said first transport channel corresponds to Enhanced Dedicated Channel E-DCH and said second transport channel corresponds to Dedicated Channel DCH.

In an embodiment, said target value corresponds to SIR target.

In an embodiment, said quality of communication using said first transport channel corresponds to a number of HARQ retransmissions.

In an embodiment, said power offset corresponds to HARQ power offset.

Another aspect of the present invention is a method for power control comprising the steps of:
- For DCH channel, if DCH quality is good, decreasing SIR target, else if DCH quality is bad, increasing SIR target,
- For E-DCH channel:
   - If E-DCH quality is good, decreasing HARQ power offset,
   - If E-DCH quality is bad, increasing HARQ power offset,
   - If HARQ power offset is already at maximum value, and if E-DCH quality is still bad, increasing SIR target, even if DCH quality is good.

Another aspect of the present invention is a method comprising:
- a step of signaling the thus adjusted power offset.

In an embodiment, said method comprises:
- a step of signaling the thus adjusted power offset using Radio Resource Control RRC protocol.

In an embodiment, said method comprises:
- a step of signaling the thus adjusted power offset using Node B Application Part NBAP protocol.

These and other objects are achieved, in another aspect of the present invention, by an entity for a mobile communication system, for performing such a method. An example of such entity is a Radio Access Network entity, such as in particular Radio Network Controller (RNC), but other examples are possible, as understood by the skilled person.

Another aspect of the present invention is an entity for a mobile communication system supporting simultaneous services per user, including at least a first service transported using a first transport channel and at least a second service transported using a second transport channel, transport using said first transport channel allowing enhanced performance with respect to transport using said second transport channel, said entity comprising:
- means for adjusting a target value for inner-loop power control, according to quality of communication using said second transport channel,
- means for adjusting a power offset of a first physical channel associated to said first transport channel, according to quality of communication using said first transport channel,
- means for additionnally adjusting said target value according to quality of communication using said first transport channel, if the thus adjusted power offset has reached a maximum value.

These and other aspects and/or objects of the present invention will become more apparent from the following description taken in conjunction with the accompanying drawings, wherein:
- figure 1 is intended to recall the general architecture of a mobile communication system, such as in particular UMTS,
- figure 2 is intended to recall the principle of the inner-loop and the outer-loop algorithm, for uplink data carried by DCH transport channel in UMTS,
- figure 3 is intended to illustrate an example of outer loop algorithm according to the present invention.

The present invention may also be explained as follows, to simplify based on examples.

In one aspect, the present invention proposes a power control algorithm for Multi-RAB case, wherein outer-loop power control is based on both DCH and E-DCH quality.

In one aspect, the invention proposes to consider both the quality of DCH RABs and the quality of E-DCH RABs when performing multi-RAB outer-loop power control and to play on two parameters together to adapt the quality on DCH and E-DCH: SIR target and HARQ power offset (that enables to increase or decrease the transmit power for E-DCH). The invention proposes to check in parallel the quality on DCH and on E-DCH.

In one aspect, the present invention proposes, in the case of simultaneous services per user, including at least a first service transported using a first transport channel (such as for example E-DCH for UMTS) and at least a second service transported using a second transport channel (such as for example DCH for UMTS), transport using said first transport channel allowing enhanced performance with respect to transport using said second transport channel, to improve power control by using following steps:
- a step of adjusting a target value for inner-loop power control (such as for example SIR target for UMTS), according to quality of communication using said second transport channel,
- a step of adjusting a power offset (such as for example HARQ power offset for E-DCH for UMTS) of a first physical channel associated to said first transport channel, according to quality of communication using said first transport channel,
- a step of additionnally adjusting said target value according to quality of communication using said first transport channel, if the thus adjusted power offset has reached a maximum value.

An example of outer-loop algorithm according to the present invention is given below:
- For the DCH part: usual algorithm is used: when the DCH quality is good (for example when BLER is lower than target), the SIR target is decreased, else when the DCH quality is bad (for example when BLER is higher than target), it is increased
- For the E-DCH part:
   - When the E-DCH quality is good, the HARQ power offset is decreased,
   - When the E-DCH quality is bad, the HARQ power offset is increased,
   - If the HARQ power offset is already at a maximum value, and if E-DCH quality is still bad, then it is allowed to increase the SIR target, even if the DCH quality is good.

In other words, and as illustrated in the table in figure 3, there are two loops operating in parallel, used differently according to the quality of both DCH and E-DCH:
- Update of the SIR target (noted "SIRt"): depending on the BLER of DCH by using the usual Outer Loop Power Control algorithm for DCH (as recalled above),
- Update of the HARQ power offset (noted "HARQ PO"): used to adapt the Tx power for E-DCH according to the E-DCH quality.

In addition, a mechanism could be provided, to limit the increase of the SIR target, due to good DCH BLER and very bad E-DCH quality.

The "E-DCH quality" can for example be based on the number of HARQ retransmissions reported by the Node B. If it is lower than a target number of HARQ retransmissions, it means that the E-DCH quality is "Good"; else, it means that the E-DCH quality is "Bad". The "E-DCH quality" could also be based on an E-DCH BLER, based on the number of HARQ retransmissions, and Transport Block Size.

HARQ power offset can for example be increased or decreased by 1 dB step, for example down to 0 dB (minimum value allowed in 3GPP), and for example up to 6 dB (maximum value allowed in 3GPP).

Other examples are of course possible, as understood by the skilled person.

In another aspect, the present invention proposes to introduce a new parameter, hereinafter noted "HSUPA.Mu!tiRAB.OLPC.SIRup", as an additional delta value (i.e. update or adjustment) to apply to the SIR target, computed with standard algorithm.

In case of HARQ Power Offset already at maximum value (for example 6dB), and in case of bad E-DCH quality and good DCH quality:
- if the value of HSUPA.MultiRAB.OLPC.SlRup is set to zero, the computation of the SIR target is similar to standard algorithm,
- if the value of HSUPA.MultiRAB.OLPC.SIRup is > 0, this could result in an increase of the final SIR target transmitted to all Nodes B in the Active Set.

In an example, at least one entity signals an updated or adjusted HARQ power offset, to at least one other entity, and the signalled updated or adjusted HARQ power offset is used by said other entity, for power control.

In another example, an updated value of HARQ Power offset can be signalled by the SRNC to the UE thanks to a "RRC reconfiguration towards UE" message (where RRC is the Radio Resource Control protocol, as specified in 3GPP TS 25.331), for example using the "E-DCH MAC-d flow power offset" IE (Information Element) included in the "Added or reconfigured E-DCH MAC-d flow" IE, itself included in "Added or Reconfigured UL TrCH information" IE, in turn included in the Radio Bearer Reconfiguration RRC message.

In another example, On updated value of HARQ Power offset can be signalled by SRNC to Node B thanks to a "NBAP reconfiguration towards Node B" message (where NBAP is the Node B Application Part protocol, as specified in 3GPP TS 25.433), for example using the "E-DCH HARQ power offset FDD" IE, included in "E-DCH FUC Information to Modify" IE, in turn included in the Radio Link Reconfiguration Prepare (or also Radio Link Reconfiguration Request) NBAP message.

The present invention also has for its object an entity for a mobile communication system supporting simultaneous services per user, including at least a first service transported using a first transport channel and at least a second service transported using a second transport channel, transport using said first transport channel allowing enhanced performance with respect to transport using said second transport channel, said entity comprising:
- means for adjusting a target value used for inner-loop power control, according to quality of communication using said second transport channel,
- means for adjusting a power offset of a first physical channel associated to said first transport channel, according to quality of communication using said first transport channel,
- means for additionnally adjusting said target value according to quality of communication using said first transport channel, if the thus adjusted power offset has reached a maximum value.

Such entity can be in particular a Radio Access Network entity, such as for example Radio Network Controller (RNC).

Another aspect, which is not part of the claimed subject-matter, is an entity (such as in particular a Radio Acecss Network entity such as for example RNC) comprising:
- means for signalling the thus adjusted power offset to another entity (such as UE or a Radio Access Network entity such as base station or Node B).

The present invention also has for its object a mobile station (or User Equipment UE) comprising:
- means for using the thus adjusted power offset (such as in particular HARQ power offset) signalled to said mobile station by another entity (such as in particular a Radio Access Network entity such as RNC).

Another aspect, which is not part of the claimed subject-matter, is an entity (such as in particular a Radio Access Network entity such as in particular base station or Node B) comprising:
- means for using the thus adjusted power offset (such as in particular HARQ power offset) signalled to said entity by another entity (such as in particular a Radio Access Network entity such as RNC).

The detailed implementation of the above-mentioned means does not raise any special problem for a person skilled in the art, and therefore such means do not need to be more fully disclosed than has been made above, by their function, for a person skilled in the art.

## Claims

1. A method for power control in a mobile communication system supporting simultaneous services per user, including at least a first service transported using a first transport channel and at least a second service transported using a second transport channel, transport using said first transport channel allowing enhanced performance with respect to transport using said second transport channel, said method comprising:
- a step of adjusting a target value for inner-loop power control, according to quality of communication using said second transport channel,
- a step of adjusting a power offset of a first physical channel associated to said first transport channel, according to quality of communication using said first transport channel, the method **characterized by**
- a step of additionnally adjusting said target value according to quality of communication using said first transport channel, if the thus adjusted power offset has reached a maximum value.

2. A method according to claim 1, wherein said first transport channel corresponds to Enhanced Dedicated Channel E-DCH and said second transport channel corresponds to Dedicated Channel DCH.

3. A method according to claim 1 or 2, wherein said target value corresponds to SIR target.

4. A method according to any of claims 1 to 3, wherein said quality of communication using said first transport channel corresponds to a number of HARQ retransmissions.

5. A method according to any of claims 1 to 4, wherein said power offset corresponds to HARQ power offset.

6. A method according to any of claims 1 to 5, comprising the steps of:
- For DCH channel, if DCH quality is good, decreasing SIR target, else if DCH quality is bad, increasing SIR target,
- For E-DCH channel:
• If E-DCH quality is good, decreasing HARQ power offset,
• If E-DCH quality is bad, increasing HARQ power offset,
• If HARQ power offset is already at maximum value, and if E-DCH quality is still bad, increasing SIR target, even if DCH quality is good.

7. A method according to any of claims 1 to 6, comprising:
- a step of signaling the thus adjusted power offset.

8. A method according to claim 7, comprising:
- a step of signaling the thus adjusted power offset using Radio Resource Control RRC protocol.

9. A method according to claim 7, comprising:
- a step of signaling the thus adjusted power offset using Node B Application Part NBAP protocol.

10. An entity for a mobile communication system supporting simultaneous services per user, including at least a first service transported using a first transport channel and at least a second service transported using a second transport channel transport using said first transport channel allowing enhanced performance with respect to transport using said second transport channel, said entity comprising:
- means for adjusting a target value for inner-loop power control, according to quality of communication using said second transport channel,
- means for adjusting a power offset of a first physical channel associated to said first transport channel, according to quality of communication using said first transport channel, the entity **characterized in that** it further comprises :
- means for additionnally adjusting said target value according to quantity of communication using said first transport channel, if the thus adjusted power offset has reached a maximum value.

## Patentansprüche

1. Ein Verfahren zur Leistungssteuerung in einem mobilen Kommunikationssystem, welches gleichzeitige Dienste pro Benutzer unterstützt und mindestens einen ersten, unter Verwendung eines ersten Transportkanals transportierten Dienst und mindestens einen zweiten, unter Verwendung eines zweiten Transportkanals transportierten Dienst umfasst, wobei der Transport über den besagten ersten Transportkanal eine erhöhte Leistung gegenüber einem Transport über den besagten zweiten Transportkanal gewährleistet, wobei das Verfahren umfasst:
- Einen Schritt des Anpassens eines Sollwertes für die Leistungssteuerung der inneren Regelschleife gemäß der Qualität der Verbindung, welche den besagten zweiten Transportkanal benutzt,
- einen Schritt des Anpassens eines Leistungsoffsets eines ersten dem besagten ersten Transportkanal zugeordneten physischen Kanals gemäβ der Qualität der Verbindung, welche den besagten ersten Transportkanal benutzt, wobei das Verfahren **gekennzeichnet ist durch**
- einen Schritt des zusätzlichen Anpassens des besagten Sollwertes gemäβ der Qualität der Verbindung, welche den besagten ersten Transportkanal benutzt, wenn der somit angepasste Leistungsoffset einen Höchstwert erreicht hat.

2. Ein Verfahren nach Anspruch 1, wobei der besagte erste Transportkanal dem verbesserten zugewiesenen Kanal E-DCH und der besagte zweite Transportkanal dem zugewiesenen Kanal DCH entspricht.

3. Ein Verfahren nach Anspruch 1 oder 2, wobei der besagte Sollwert dem SIR-Sollwert entspricht.

4. Ein Verfahren nach einem beliebigen der Ansprüche 1 bis 3, wobei die besagte Qualität der Verbindung, welche den besagten ersten Transportkanal benutzt, einer Anzahl von HARQ-Übertragungswiederholungen entspricht.

5. Ein Verfahren nach einem beliebigen der Ansprüche 1 bis 4, wobei der besagte Leistungsoffsets dem HARQ-Leistungsoffset entspricht,

6. Ein Verfahren nach einem beliebigen der Ansprüche 1 bis 5, welches die folgenden Schritte umfasst:
- Für den DCH-Kanal, Verringern des SIR-Sollwertes, wenn die DCH-Qualität gut ist, anderenfalls Erhöhen des SIR-Sollwertes, wenn die DCH-Qualität schlecht ist,
- Für den E-DCH-Kanal:
• Wenn die E-DCH-Qualität gut ist, Verringern des HARQ-Leistungsoffsets,
• wenn die E-DCH-Qualität schlecht ist, Erhöhen des HARQ-Leistungsoffsets,
• wenn der HARQ-Leistungsoffset schon bei einem Höchstwert liegt, und wenn die E-DCH-Qualität immer noch schlecht ist, Erhöhen des SIR-Sollwertes, selbst wenn die DCH-Qualität gut ist.

7. Ein Verfahren nach einem beliebigen der Ansprüche 1 bis 6, umfassend:
- Einen Schritt des Signalisierens des somit angepassten Leistungsoffsets.

8. Ein Verfahren nach Anspruch 7, umfassend:
- Einen Schritt des Signalisierens des somit angepassten Leistungsoffsets unter Verwendung eines Funkressourcensteuerungs-RRC-Protokolls.

9. Ein Verfahren nach Anspruch 7, umfassend:
- Einen Schritt des Signalisierens des somit angepassten Leistungsoffsets unter Verwendung eines Knoten-B-Anwendungsteil-NBAP-Protokolls.

10. Eine Instanz für ein mobiles Kommunikationssystem welches gleichzeitige Dienste pro Benutzer unterstützt und mindestens einen ersten, unter Verwendung eines ersten Transportkanals transportierten Dienst und mindestens einen zweiten, unter Verwendung eines zweiten Transportkanals transportierten Dienst umfasst, wobei der Transport über den besagten ersten Transportkanal eine erhöhte Leistung gegenüber einem Transport über den besagten zweiten Transportkanals gewährleistet, wobei die Instanz umfasst:
- Mittel zum Anpassen eines Sollwertes für die Leistungssteuerung der inneren Regelschleife gemäß der Qualität der Verbindung, weiche den besagten zweiten Transportkanal benutzt,
- Mittel zum Anpassen eines Leistungsoffsets eines ersten dem besagten ersten Transportkanal zugeordneten physischen Kanals gemäß der Qualität der Verbindung, welche den besagten ersten Transportkanal benutzt, wobei die Instanz **dadurch gekennzeichnet ist, dass** sie weiterhin umfasst:
- Mittel zum zusätzliche Anpassen des besagten Sollwertes gemaβ der Qualität der Verbindung, welche den besagten ersten Transportkanal benutzt, wenn der somit angepasste Leistungsoffset einen Höchstwert erreicht hat.

## Revendications

1. Procédé de commande de la puissance dans un système de communications mobiles prenant en charge des services simultanés par utilisateur, comprenant au moins un premier service transporté en utilisant un premier canal de transport et au moins un deuxième service transporté en utilisant un deuxième canal de transport, le transport utilisant ledit premier canal de transport permettant une meilleure performance par rapport au transport utilisant ledit deuxième canal de transport, ledit procédé comprenant :
- une étape de réglage d'une valeur cible pour une commande de la puissance d'une boucle interne, conformément à la qualité de communication utilisant ledit deuxième canal de transport,
- une étape de réglage d'un décalage de puissance d'un premier canal physique associé audit premier canal de transport, conformément à la qualité de communication utilisant ledit premier canal de transport, le procédé étant **caractérisé par**,
- une étape de réglage supplémentaire de ladite valeur cible conformément à la qualité de communication utilisant ledit premier canal de transport, si le décalage de puissance ainsi réglé a atteint une valeur maximale.

2. Procédé selon la revendication 1, dans lequel ledit premier canal de transport correspond à un canal dédié amélioré E-DCH et ledit deuxième canal de transport correspond à un canal dédié DCH.

3. Procédé selon la revendication 1 ou 2, dans lequel ladite valeur cible correspond au rapport SIR cible.

4. Procédé selon l'une quelconque des revendications 1 à 3, dans lequel ladite qualité de communication utilisant ledit premier canal de transport correspond à un nombre de retransmissions HARQ.

5. Procédé selon l'une quelconque des revendications 1 à 4, dans lequel ledit décalage de puissance correspond au décalage de puissance HARQ.

6. Procédé selon l'une quelconque des revendications 1 à 5, comprenant les étapes suivantes :
- pour le canal DCH, si la qualité du DCH est bonne, diminuer le rapport SIR cible ou, si la qualité du DCH est mauvaise, augmenter le rapport SIR cible,
- pour le canal E-DCH :
• si la qualité de l'E-DCH est bonne, diminuer le décalage de puissance HARQ,
• si la qualité de l'E-DCH est mauvaise, augmenter le décalage de puissance HARQ,
• si le décalage de puissance HARQ est déjà à la valeur maximale, et si la qualité de l'E-DCH est toujours mauvaise, augmenter le rapport SIR cible, même si la qualité du DCH est bonne.

7. Procédé selon l'une quelconque des revendications 1 à 6, comprenant :
- une étape de signalisation du décalage de puissance ainsi réglé.

8. Procédé selon la revendication 7, comprenant :
- une étape de signalisation du décalage de puissance ainsi réglé en utilisant un protocole de commande de ressource radio RRC.

9. Procédé selon la revendication 7, comprenant:
- une étape de signalisation du décalage de puissance ainsi réglé en utilisant un protocole NBAP.

10. Entité pour un système de communications mobiles prenant en charge des services simultanés par utilisateur, comprenant au moins un premier service transporté en utilisant un premier canal de transport et au moins un deuxième service transporté en utilisant un deuxième canal de transport, le transport utilisant ledit premier canal de transport permettant une meilleure performance par rapport au transport utilisant ledit deuxième canal de transport, ladite entité comprenant :
- moyens pour régler une valeur cible pour une commande de la puissance d'une boucle interne, conformément à la qualité de communication utilisant ledit deuxième canal de transport,
- moyens pour régler un décalage de puissance d'un premier canal physique associé audit premier canal de transport, conformément à la qualité de communication utilisant ledit premier canal de transport, l'entité étant **caractérisée en ce qu'**elle comprend en outre,
- moyens de réglage supplémentaire de ladite valeur cible conformément à la qualité de communication utilisant ledit premier canal de transport, si le décalage de puissance ainsi réglé a atteint une valeur maximale.
